# EUROPÄISCHE PATENTSCHRIFT

(11) **EP 2 434 360 B1**
(45) Veröffentlichungstag und Bekanntmachung des Hinweises auf die Patenterteilung: **08.01.2020**
(21) Anmeldenummer: 10178336.3
(22) Anmeldetag: 22.09.2010
(51) Int. Cl.: G05B 19/414

(54) **Bewegungssteuerungssystem**
Motion control system
Système de contrôle de mouvement

(43) Veröffentlichungstag der Anmeldung: 28.03.2012
(73) Patentinhaber: Siemens Aktiengesellschaft, 80333 München (DE)
(72) Erfinder: Möhring, Rainer, 97520 Röthlein (DE); Schlinkert, Jochen, 3703 Aeschi (CH); Vollmann, Jörg, 91325 Adelsdorf (DE); Wagner, Peter, 91217 Hersbruck (DE)

(56) Entgegenhaltungen:
- EP-A2- 1 768 006
- EP-A2- 1 892 598
- WO-A2-2006/042799
- DE-A1-102004 052 555
- DE-A1-102007 015 762
- US-A- 5 774 377

## Beschreibung

Die Erfindung betrifft ein Bewegungssteuerungssystem. Ein Bewegungssteuerungssystem weist beispielweise eine Vielzahl von Antrieben auf. Zur Überwachung von Funktionen und/oder des Verhaltens des Bewegungssteuerungssystems können Daten in einem Trace gespeichert werden.

Eine Aufgabe der Erfindung ist es die Auswertbarkeit gespeicherter Daten zu verbessern.

Eine Lösung der Aufgabe ergibt sich bei einem Bewegungssteuerungssystem bzw. einem entsprechenden Betriebsverfahren mit Merkmalen nach einem der Ansprüche 1 bis 8.

Das Bewegungssteuerungssystem weist z.B. einen ersten Antrieb und einen zweiten Antrieb auf. Zur Regelung und/oder Steuerung der Antriebe ist eine Bewegungssteuerung für diese Antriebe vorhanden. Die Bewegungssteuerungen der Antriebe sind über eine Datenkommunikation verknüpft, wobei beispielsweise auch eine Zentraleinheit zur Regelung und/oder Steuerung vorhanden sein kann. Das Bewegungssteuerungssystem betrifft beispielsweise eine Produktionsmaschine oder auch eine Werkzeugmaschine. Beispiele für derartige Maschinen sind: Schleifmaschine, Fräsmaschine, Drehbank, Druckmaschine, Presse, Kran, Verpackungsmaschine, usw.

Aus der DE 10 2004 052 555 A ist ein Verfahren zum Austauschen von Daten zwischen Teilnehmern wenigstens zweier Netzwerke bekannt. Von den Teilnehmern aufgezeichnete Daten (Trace) werden mit einem Zeitstempel entsprechend einer globalen Zeitbasis versehen, so dass bei einer übergeordneten Einheit die zeitliche Korrelation der aufgezeichneten Daten erkennbar bleibt. Ähnliche Ansätze beschreiben die EP 1 892 598 A und die WO 2006/042 799 A.

Durch eine Zeitsynchronisation unterschiedlicher Traces unterschiedlicher Komponenten des Bewegungssteuerungssystem kann die Auswertbarkeit der Daten der Traces verbessert werden. Beispiele unterschiedlicher Komponenten, welche einen Trace aufweisen können sind: Speicherprogrammierbare Steuerung, Leitrechner, Bewegungssteuerung, Nockensteuerwerk, Registerregelung, usw. Diese Komponenten sind verschiedene Teile eines Automatisierungssystems, welches beispielsweise der Automatisierung einer Werkzeugmaschine oder einer Produktionsmaschine dient.

In einer Ausprägung weist ein Bewegungssteuerungssystem eine erste Bewegungssteuerung, eine zweite Bewegungsteuerung und einen Datenbus auf. Der Datenbus ist Beispielsweise ein Bussystem auf Basis von Profibus, Ethernet oder CAN-Bus. Das Bewegungssteuerungssystem weist ferner eine Globalzeit auf. Die Globalzeit ist beispielsweise eine Systemzeit auf welche Zeiten unterschiedlicher Komponenten im System, in Bezug gesetzt werden können. Die Globalzeit kann auch die einzige Zeit im System sein. Ferner kann die Globalzeit in unterschiedliche Taktzeiten unterteilt sein.

Mittels der ersten Bewegungssteuerung werden erste Tracedaten gesammelt. Mittels der zweiten Bewegungssteuerung werden zweite Tracedaten gesammelt. Beispiele für Tracedaten sind: Iststrom, Istspannung, Steuerwort, Alarmsignal, Drehzahlistwert, Lageistwert, Zündimpulse, Temperatur, Druck, usw. Die Tracedaten der Bewegungssteuerungen weisen einen Zeitstempel auf. Die Zeit der Zeitstempel von der ersten Bewegungssteuerung kann gleich oder ungleich der Zeit der Zeitstempel der zweiten Bewegungssteuerung sein. Sind die Zeiten unterschiedlich ist zumindest bekannt, in welcher Relation die Zeiten zueinander stehen, so dass die Tracedaten unterschiedlicher Bewegungssteuerungen zueinander in Relation gesetzt werden können. Beispielsweise können die Zeiten in Relation zu einer Globalzeit gesetzt werden. In einer Ausprägung des Systems ist die Globalzeit beispielsweise die Zeit der ersten wie auch der zweiten Bewegungssteuerung. Die Globalzeit kann von einem Masterzeitgeber über einen Datenbus an die Bewegungssteuerungen übertragen werden. Die Tracedaten weisen vorteilhaft einen von der Globalzeit abhängigen Zeitstempel auf. Dies betrifft erste Tracedaten von der ersten Bewegungssteuerung und zweite Tracedaten von der zweiten Bewegungssteuerung. Die Tracedaten der Bewegungssteuerungen können in einem Tracespeicher in der jeweiligen Bewegungssteuerung gespeichert sein und von dort ausgelesen werden um diese mit anderen Tracedaten weiterer Bewegungssteuerungen zu kombinieren. Die Tracedaten der Bewegungssteuerungen können beispielsweise auch direkt von der Bewegungssteuerung an einen externen Trace übertragen werden.

Haben verschiedene Tracedaten eine gemeinsame Zeitbasis, so können diese leichter miteinander in Verbindung gesetzt werden. Mittels der Zeitsynchronisation getrennter Messungen (Tracedaten) können die getrennten Messungen z.B. graphisch einfacher überlagert werden, um diese in einem Fenster darzustellen. Vor einer Darstellung können die Tracedaten aus den unterschiedlichen Messungen (von einer ersten Bewegungssteuerung, von einer weiteren Bewegungssteuerung, ... bzw. von einem ersten Sensor, von einem weiteren Sensor, ...) auch mathematisch verarbeitet werden (z.B. Addition, Subtraktion, Korrelationsfunktionen, FFT, usw.). Die Darstellung der Tracedaten und/oder deren Verarbeitung erfolgt beispielsweise in einem Engineeringsystem oder auch in einem Leitrechnersystem. Das Engineeringsystem dient ferner beispielsweise folgenden Aufgaben: Programmierung von Bewegungsabläufen, Programmierung eines Bussystems, Projektierung eines Automatisierungssystems, usw.

Eine Bewegungssteuerung kann derart ausgebildet sein, dass diese zumindest einen Mikroprozessor (insbesondere eine CPU) aufweist. Messungen der Tracedaten erfolgen insbesondere unter Zuhilfenahme zumindest eines Mikroprozessors. Den Messdaten wird ein Zeitstempel mitgegeben, wodurch es beispielsweise mittels eines Engineeringsystems möglich ist, Tracedaten als Signal zeitrichtig zueinander darzustellen.

Durch die Nutzung von Zeitstempeln, welche zur Messung vergeben werden, kann der Einfluss von Kommunikationstopologien auf die Auswertemöglichkeit der gemessenen Daten reduziert werden. Die Kommunikationstopologie braucht damit keinen Einfluss auf den zeitsynchronisierten, verteilten Trace haben, sofern das Kommunikationssystem die Topologie beherrscht. Zeitstempel werden beispielsweise direkt durch die Bewegungssteuerung bzw. durch den Sensor vergeben, wobei die Bewegungssteuerung und/oder der Sensor ein Zeitsignal eines Datenbusses empfängt. Durch diesen Empfang ist insbesondere eine Synchronisation auf die Globalzeit möglich.

In einer Ausgestaltung des Bewegungssteuerungssystems weist die erste Bewegungssteuerung einen ersten Trace und die zweite Bewegungssteuerung einen zweiten Trace auf, wobei erste Tracedaten des ersten Trace mit zweiten Tracedaten des zweiten Trace verknüpft sind. Eine Verknüpfung ergibt sich bereits durch einen Zeitstempel, dessen Zeit mit einer Globalzeit gekoppelt ist. Eine weitere Verknüpfung ergibt sich beispielsweise durch eine mathematische Verarbeitung beider Tracedaten. Danach ist es beispielsweise möglich Signale Daten gleichzeitig auf unterschiedlichen Steuerungs- und/oder Regelungseinrichtungen aufzuzeichnen und daraus resultierende Daten zeitsynchron in einer Grafik darzustellen.

In einer Ausgestaltung des Bewegungssteuerungssystems sind zumindest zwei Bewegungssteuerungen über eine Gleichlauffunktion miteinander gekoppelt. Eine erste Bewegungssteuerung ist demnach mit einer zweiten oder jeder weiteren Bewegungssteuerung über eine Funktion (hier z.B. eine Gleichlaufsfunktion) verknüpft. Die Bewegungsteuerungen weisen beispielsweise einen Master auf oder auch ein Leitsystem. Über ein Bussystem können Funktionen Bewegungssteuerungen synchronisiert werden.

In einem synchronisierten Bussystem mit Übertragung der Systemzeit (Globalzeit) sind unter Kenntnis von Verzögerungszeiten (Delayzeiten) einzelne Busanschaltungen und damit auch die Steuerungssysteme zeitlich zueinander wohl definiert, bzw. genau bestimmbar.

Durch die Verwendung der Globalzeit ist es möglich einen verteilten Trace mit genauer zeitlicher Darstellung der Signale zueinander zu realisieren. Die Signale können sehr genau zeitlich zugeordnet werden, und damit auch in einem gemeinsamen Trace mit einer hoch auflösenden Zeitbasis dargestellt werden. Eine Parametrierung des Trace erfolgt beispielsweise mittels eines Engineeringsystems. Der Start eines oder mehrerer Traces kann über ein Triggersignal auf dem Bus initiiert werden. Auch ein Projektübergreifender Start ist durchführbar, z.B. in Verbindung mit einem projektübergreifenden Gleichlauf.

In einer Ausgestaltung des Bewegungssteuerungssystems werden in einem Graphik Tracedaten unterschiedlicher Bewegungssteuerungen zeitsynchronisiert dargestellt. Dies wird durch einen synchronisierten Datenbus möglich. Über den Bus ist die Systemzeit zu übertragen, welche der Synchronisation dient.

Den Start eines oder mehrerer Traces kann ein Trigger auslösen. Der Trigger kann ein internes Softwaresignal oder auch ein externes HW-Triggersignal sein. Mit nur einem Trigger können unterschiedliche separate Traces gestartet werden. Das Triggersignal kann beispielsweise in einer Graphik auch zusammen mit den Tracesignalen dargestellt werden.

Durch die Verwendung von Zeitstempeln mit einer Abhängigkeit von einer Globalzeit ist ein gleichzeitiges, gemeinsam getriggertes Aufzeichnen von Signalen auf verschiedenen Automatisierungssystemen und eine zeitsynchronisierte Darstellung und/oder gemeinsame Darstellung in einem grafischen Trace möglich.

Trigger können auch über einen zweiten Kommunikationsweg übertragen werden, die zeitliche Genauigkeit der Triggerereignisse ist dabei dann nicht entscheidend, wenn die Tracewerte wie beschrieben selbst einen Zeitstempel besitzen.

In einer Ausgestaltung des Systems erfolgt nach Starten des Traces die Aufzeichnung der Daten in einem Ringpuffer. Der Trace kann in jeder Bewegungssteuerung des Gesamtsystems oder auch nur in einer Auswahl von Bewegungssteuerungen gestartet werden. Der Trace kann sich auch in einer Speicherprogrammierbaren Steuerung (SPS), oder in einem Leitsystem oder Engineeringsystem befinden, wobei Tracedaten unterschiedlicher Geräte (z.B. Sensor, Aktor, Steuerung, Regelung) über den Datenbus mit einem Zeitstempel an den Trace übertragen werden. Der Zeitstempel wird also möglichst nahe an der Quelle der Datenentstehung vergeben und mit einem Zeitstempel versehen, welcher von einer Globalzeit eines größeren Systems mit mehreren Kommunikationsteilnehmern abhängt.

Speichert das Engineeringsystem Tracedaten, so kann dort auch eine Auswertung erfolgen. Die aufgezeichneten Daten werden mit Zeitstempel an das Engineeringsystem gesendet. Dort können die Daten mit den Zeitstempeln bzgl. ihrer Relation zueinander ausgewertet und in eine gemeinsame Zeitbasis übertragen werden.

In einer Ausgestaltung kann das Triggersignal von einer Bewegungssteuerung bzw. von einer CPU, an welcher der Trigger auftritt, über UDP Broadcast an weitere insbesondere alle anderen Geräte im System gesendet werden. Falls ein Triggersignal auftritt, bzw. kommuniziert wurde, werden die Tracewerte ab dem Trigger aus dem Ringpuffer in den Tracespeicher geschrieben, bzw. die Werte werden ab dem Triggersignal nicht mehr überschrieben.

Ein Trigger (Triggersignal) wird über einen Datenbus an die (insbesondere alle) mit dem Datenbus verbundenen Geräte übermittelt. Dabei kann gleichzeitig mit dem Triggersignal eine Zeitinformation (insbesondere ein Zeitstempel) übertragen werden. Durch diese Zeitinformation kann in Verbindung mit der Globalzeit ermittelt werden, wann der Trigger tatsächlich aufgetreten ist. Hierfür wird beispielsweise eine Laufzeit der Triggerinformation über den Datenbus verwendet. Ein Automatisierungsgerät bzw. ein Gerät am Datenbus kann hieraus beispielsweise eine Information ableiten, wann eine Datenerfassung zeitsynchron beendet werden kann (dies stellt ein Traceende dar). Die Zeitsynchronität bezieht sich dabei insbesondere auf die Taktzeit des Datenbusses.

Durch die Verwendung von Zeitstempeln muss der Trigger nicht zeitsynchronisiert werden, da die Werte zunächst unabhängig davon bereits gespeichert werden können. Eine Synchronisation von Tracedaten erfolgt über die globalzeitabhängigen Zeitstempel. Hier werden die vorteilhaften Eigenschaften eines synchronisierten Kommunikationssystems mit einer genauen Zeitinformation über das ganze System deutlich. Dabei ist eine Separierung der Kommunikation des Triggerereignisses vom Aufzeichnungs- und Auswertungsvorgang möglich. Die zeitliche Auflösung / Genauigkeit kann damit der Genauigkeit der Zeitsnychronisation in einem isochronen Kommunikationssystem wie z.B. PROFINET IRT entsprechen (IRT: Isochrones Realtime Ethernet).

Die beschriebenen Variationen eines Bewegungssteuerungssystem betreffen jeweils auch ein entsprechendes Verfahren zum Betrieb eines Bewegungssteuerungssystems. Bei einem Verfahren zur Bewegungssteuerung ist eine erste Bewegungssteuerung mit einer zweiten Bewegungsteuerung über einen Datenbus verbunden. Erste Tracedaten der ersten Bewegungssteuerung weisen einen von einer Globalzeit abhängigen Zeitstempel auf. Ebenso weisen zweite Tracedaten der zweiten Bewegungssteuerung einen von der Globalzeit abhängigen Zeitstempel auf, wobei die unterschiedlichen Tracedaten über den Zeitstempel korreliert sind.

Im Folgenden wird die Erfindung beispielhaft anhand einer Figur beschrieben, welche bei einem Bewegungssteuerungssystem eine Aufgabenzuordnung bzw. eine Kommunikationsstruktur mit einem zeitsynchronen Trace zeigt.

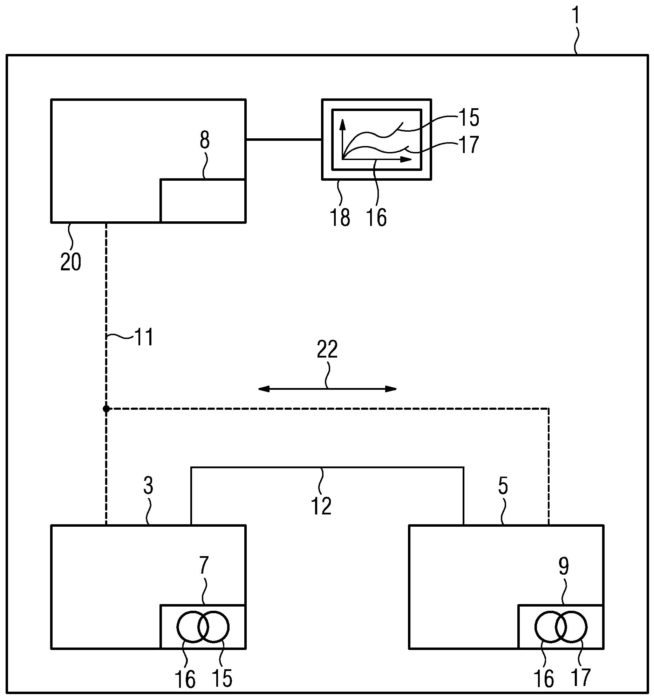

Die Darstellung gemäß der Figur zeigt eine erste Bewegungssteuerung 3 und eine zweite Bewegungssteuerung 5. Bei den Bewegungssteuerungen 3, 5 kann es sich auch um Antriebssysteme handeln, welche auch einen Stromrichter zum Bestromen einer elektrischen Maschine aufweisen. Die erste Bewegungssteuerung 3 weist einen ersten Trace 7 auf. Die zweite Bewegungssteuerung weist einen zweiten Trace 9 auf. Die Traces 7 und 9 können Signale, Werte und Daten aufzeichnen, welche in den Bewegungssteuerungen 3 und 5 zur Verfügung stehen. Der erste Trace 7 weist Tracedaten 15 auf, welche mit einem Zeitstempel 16 versehen sind. Dies ist in der Figur durch überschneidende Kreise dargestellt. Ebenso weist der zweite Trace 9 Tracedaten 17 mit Zeitstempeln 16 auf. Die Bewegungssteuerungen 3, 5 sind über einen Datenbus 11 miteinander datentechnisch verbunden. Ebenso können die Bewegungssteuerungen 3 und 5 über eine weitere Datenleitung 12 (z.B. Profinet IRT) miteinander verbunden sein. Über den Datenbus 11 sind die Bewegungssteuerungen 3 und 5 mit einem Engineeringsystem 20 datentechnisch verbunden. Das Engineeringsystem 20 weist einen Trace 8 auf. In diesen Trace 8 können beispielsweise die Tracedaten 15 und 17, welche einen Zeitstempel aufweisen, gespeichert werden, nach dem diese über den Datenbus 11 zum Engineeringsystem 20 übertragen wurden. Weist nur das Engineeringsystem 20 einen Trace 8 auf und sind keine Traces in den Bewegungssteuerungen vorhanden (in der Figur nicht dargestellt), so können zu tracende Daten direkt von den Bewegungssteuerungen zum Engineeringsystem 20 übertragen werden um diese dort im Trace 8 zu speichern. Die Daten werden dabei schon mit dem Zeitstempel, welcher sich an einer Globalzeit orientiert, über den Datenbus 11 zum Engineeringsystem 20 übertragen. Auch die Globalzeit 22 wird über den Bus 11 kommuniziert.

Eine Datenübertragung von Aufzeichnungsdaten (Tracedaten) kann über eine separate Ethernet Verbindung, welche einen Datenbus darstellt, oder auch über einen Profinet-Strang 12 erfolgen.

Eine Triggerübertragung kann beispielsweise über einen asynchronen Kommunikationspfad erfolgen (z.B. UDP (User Data Protocol) auf Profinet-Strang).

Das Engineeringsystem 20 weist einen Monitor 18 zur Darstellung der Tracedaten 15 und 17 auf, wobei diese in einer gemeinsamen Graphik über eine Zeitachse für die Zeitstempeldaten 16 dargestellt sind. Dies dient einer zeitsynchronen Darstellung von Daten aus unterschiedlichen Geräten, hier Bewegungssteuerungen.

## Patentansprüche

1. Bewegungssteuerungssystem (1), welches eine erste Bewegungssteuerung (3), eine zweite Bewegungsteuerung (5), einen Datenbus (11) und eine Globalzeit aufweist,
wobei erste, von der ersten Bewegungssteuerung (3) mit einem ersten Trace (7) aufgezeichnete Tracedaten (15) einen von der Globalzeit abhängigen Zeitstempel aufweisen und
wobei zweite, von der zweiten Bewegungssteuerung (5) mit einem zweiten Trace (9) aufgezeichnete Tracedaten (17) einen von der Globalzeit abhängigen Zeitstempel aufweisen und wobei die unterschiedlichen Tracedaten (15, 17) über den jeweiligen Zeitstempel verknüpft werden, wobei ein Trigger über den Datenbus (11) an die erste und zweite Bewegungssteuerung (3, 5) übermittelbar ist, **dadurch gekennzeichnet,**
- **dass** der Trigger eine Zeitinformation aufweist und die Zeitinformation gleichzeitig mit dem Trigger zur Übertragung vorgesehen ist und
- **dass** aus der vom Trigger umfassten Zeitinformation ein Traceende zur Beendigung der Aufzeichnung der Tracedaten (15, 17) zur Ermittlung vorgesehen ist.

2. Bewegungssteuerungssystem (1) nach Anspruch 1,
wobei die erste Bewegungssteuerung (3) mit der zweiten Bewegungssteuerung (5) über eine Gleichlauffunktion miteinander verknüpft ist.

3. Bewegungssteuerungssystem (1) nach Anspruch 1 oder 2,
wobei in einer Graphik Tracedaten (15,17) unterschiedlicher Bewegungssteuerungen (3,5) zeitsynchronisiert dargestellt sind.

4. Bewegungssteuerungssystem (1) nach Anspruch 1 bis 3,
wobei der Datenbus (11) synchronisiert ist, wobei der Datenbus (11) eine Systemzeit aufweist, welche der Synchronisation dient.

5. Bewegungssteuerungssystem (1) nach Anspruch 1 bis 4,
wobei ein Trigger zum Start des ersten und/oder zweiten Trace (7, 9) vorgesehen ist.

6. Bewegungssteuerungssystem (1) nach Anspruch 1 bis 5,
wobei ein Ringpuffer zur Speicherung von Tracedaten (15, 17) vorgesehen ist.

7. Bewegungssteuerungssystem (1) nach Anspruch 1 bis 6,
wobei ein Engineeringsystem (20) Tracedaten (15,17) speichert.

8. Verfahren zur Bewegungssteuerung, wobei eine erste Bewegungssteuerung (3) mit einer zweiten Bewegungsteuerung (5) über einen Datenbus (11) verbunden ist,
wobei erste Tracedaten (15) der ersten Bewegungssteuerung (3) einen von einer Globalzeit abhängigen Zeitstempel aufweisen und
wobei zweite Tracedaten (17) der zweiten Bewegungssteuerung (5) einen von der Globalzeit abhängigen Zeitstempel aufweisen,
wobei die unterschiedlichen Tracedaten (15,17) über den Zeitstempel verknüpft werden und
wobei ein Trigger über den Datenbus (11) an die erste und zweite Bewegungssteuerung (3, 5) übermittelt wird,
**dadurch gekennzeichnet,**
**dass** der Trigger eine Zeitinformation aufweist und die Zeitinformation gleichzeitig mit dem Trigger zur Übertragung vorgesehen ist und
**dass** aus der vom Trigger umfassten Zeitinformation ein Traceende zur Beendigung der Aufzeichnung der Tracedaten (15, 17) zur Ermittlung vorgesehen ist.

## Claims

1. Motion control system (1), which has a first motion controller (3), a second motion controller (5), a data bus (11) and a global time,
wherein first trace data (15) recorded by the first motion controller (3) with a first trace (7) has a time stamp dependent on the global time and
wherein second trace data (17) recorded by the second motion controller (5) with a second trace (9) has a time stamp dependent on the global time and
wherein the different trace data (15, 17) is linked via the respective time stamp, wherein a trigger can be transmitted to the first and second motion controller (3, 5) via the data bus (11), **characterised in that**
- the trigger has time information and the time information is provided simultaneously with the trigger for transmission and
- a trace end for terminating the recording of the trace data (15, 17) is provided for determination from the time information comprised by the trigger.

2. Motion control system (1) according to claim 1,
wherein the first motion controller (3) and the second motion controller (5) are linked with each other via a synchronising function.

3. Motion control system (1) according to claim 1 or 2,
wherein trace data (15, 17) from different motion controllers (3, 5) is represented in a time-synchronous manner in a graphic.

4. Motion control system (1) according to claim 1 to 3,
wherein the data bus (11) is synchronised, wherein the data bus (11) has a system time, which serves synchronisation purposes.

5. Motion control system (1) according to claim 1 to 4,
wherein a trigger is provided for the start of the first and/or second trace (7, 9).

6. Motion control system (1) according to claim 1 to 5,
wherein a ring buffer is provided for storing trace data (15, 17).

7. Motion control system (1) according to claim 1 to 6,
wherein an engineering system (20) stores trace data (15, 17).

8. Method for motion control, wherein a first motion controller (3) is connected to a second motion controller (5) via a data bus (11),
wherein first trace data (15) of the first motion controller (3) has a time stamp dependent on a global time and
wherein second trace data (17) of the second motion controller (5) has a time stamp dependent on the global time,
wherein the different trace data (15, 17) is linked via the time stamp and
wherein a trigger can be transmitted to the first and second motion controller (3, 5) via the data bus (11),
**characterised in that**
the trigger has time information and the time information is provided simultaneously with the trigger for transmission and a trace end for terminating the recording of the trace data (15, 17) for determination is provided from the time information comprised by the trigger.

## Revendications

1. Système de commande de mouvement (1) qui présente une première commande de mouvement (3), une seconde commande de mouvement (5), un bus de données (11) et un temps global,
dans lequel des premières données de traces (15) enregistrées par la première commande de mouvement (3) avec une première trace (7) présentent une estampille temporelle dépendante du temps global et
dans lequel des secondes données de traces (17) enregistrées par la seconde commande de mouvement (5) avec une seconde trace (9) présentent une estampille temporelle dépendante du temps global et
dans lequel les différentes données de traces (15, 17) sont associées par l'intermédiaire de l'estampille temporelle respective, dans lequel un déclencheur peut être transmis par l'intermédiaire du bus de données (11) à la première et à la seconde commande de mouvement (3, 5), **caractérisé en ce que**
- le déclencheur présente une information temporelle et l'information temporelle est prévue simultanément avec le déclencheur pour effectuer une transmission et
- une fin de trace destinée à la fin de l'enregistrement des données de traces (15, 17) à partir de l'information temporelle incluse dans le déclencheur est prévue pour effectuer une détermination.

2. Système de commande de mouvement (1) selon la revendication 1,
dans lequel la première commande de mouvement (3) est associée à la seconde commande de mouvement (5) par l'intermédiaire d'une fonction de synchronisation.

3. Système de commande de mouvement (1) selon la revendication 1 ou 2,
dans lequel dans un graphique des données de traces (15, 17) de différentes commandes de mouvement (3, 5) sont représentées synchronisées dans le temps.

4. Système de commande de mouvement (1) selon les revendications 1 à 3,
dans lequel le bus de données (11) est synchronisé, dans lequel le bus de données (11) présente un temps système qui sert à la synchronisation.

5. Système de commande de mouvement (1) selon les revendications 1 à 4,
dans lequel un déclencheur destiné au lancement de la première et/ou de la seconde trace (7, 9) est prévu.

6. Système de commande de mouvement (1) selon les revendications 1 à 5,
dans lequel un tampon circulaire destiné à la mise en mémoire de données de traces (15, 17) est prévu.

7. Système de commande de mouvement (1) selon les revendications 1 à 6,
dans lequel un système d'ingénierie (20) met en mémoire les données de traces (15, 17).

8. Procédé destiné à la commande de mouvement, dans lequel une première commande de mouvement (3) est reliée à une seconde commande de mouvement (5) par l'intermédiaire d'un bus de données (11),
dans lequel des premières données de traces (15) de la première commande de mouvement (3) présentent une estampille temporelle dépendante d'un temps global et
dans lequel des secondes données de traces (17) de la seconde commande de mouvement (5) présentent une estampille temporelle dépendante du temps global,
dans lequel les différentes données de traces (15, 17) sont associées par l'intermédiaire de l'estampille temporelle et dans lequel un déclencheur est transmis par l'intermédiaire du bus de données (11) à la première et à la seconde commande de mouvement (3, 5),
**caractérisé en ce que**
le déclencheur présente une information temporelle et l'information temporelle est prévue simultanément avec le déclencheur pour effectuer la transmission et
**en ce que**, à partir de l'information temporelle incluse dans le déclencheur, une fin de trace destinée à la fin de l'enregistrement des données de traces (15, 17) est prévue pour effectuer la détermination.
